# EUROPÄISCHE PATENTANMELDUNG

(11) **EP 4 147 909 A1**
(43) Veröffentlichungstag der Anmeldung: **15.03.2023**
(21) Anmeldenummer: 22193346.8
(22) Anmeldetag: 31.08.2022
(51) Int. Cl.: B60P 3/34

(54) **FREIZEITFAHRZEUG, INSBESONDERE WOHNMOBIL ODER WOHNWAGEN, UND RAUMERWEITERUNG**

(30) Priorität: 12.09.2021 DE 102021123569
(71) Anmelder: Erwin Hymer Group SE, 88339 Bad Waldsee (DE)
(72) Erfinder: Dr. Rüdiger Freimann, 88436 Eberhardzell (DE); Jens Döring, 88339 Bad Waldsee (DE)
(74) Vertreter: Waller, Stefan

(57) **Zusammenfassung**

Raumerweiterung (2) für ein Freizeitfahrzeug (1), insbesondere für ein Wohnmobil oder einen Wohnwagen, mit einem ausfahrbaren Element (3) und zumindest einer Seitenwand (4), wobei die Seitenwand (4) zumindest mittelbar mit dem ausfahrbaren Element (3) verbunden ist. Vorgeschlagen wird, dass die Seitenwand (4) als flexible Seitenwand (4) ausgebildet ist, dass die Seitenwand (4) in einem Ausgangszustand, in dem das ausfahrbare Element (3) eingefahren ist, gefaltet ist, dass die Seitenwand (4) in einem ausgefahren Zustand, in dem das ausfahrbare Element (3) ausgefahren ist, zumindest im Wesentlichen gestreckt ist, dass zumindest ein Zugmittel (5) vorgesehen ist und dass das Zugmittel (5) bei einem Verstellen des ausfahrbaren Elements (3) aus dem ausgefahren Zustand in den Ausgangszustand die Seitenwand (4) führt. Ferner ist ein Freizeitfahrzeug (1) mit solch einer Raumerweiterung (2) angegeben.

## Beschreibung

Die Erfindung betrifft ein Freizeitfahrzeug, insbesondere ein Wohnmobil oder einen Wohnwagen, mit zumindest einer Raumerweiterung.

Aus der CN 211493816 U ist eine Raumerweiterung für ein Wohnmobil bekannt. Die bekannte Raumerweiterung weist eine hintere Platte und Seitenplatten auf. Außerdem ist eine oben angeordnete, elektrisch betätigte Verstellstange vorgesehen, die unter anderem die hintere Platte ausfährt, so dass eine Nutzung zum Schlafen möglich ist. Über die Verstellstange erfolgt auch ein Einfahren. Die starren Seitenplatten sind klappbar ausgeführt, um den Platzbedarf im eingefahrenen Zustand zu verringern.

Die aus der CN 211493816 U bekannte Raumerweiterung hat den Nachteil, dass die Ausgestaltung aufwändig ist, da insbesondere die starren Seitenplatten zusammenklappbar ausgeführt sind.

Der vorliegenden Erfindung liegt die Aufgabe zugrunde, ein Raumerweiterung und ein Freizeitfahrzeug mit einer Raumerweiterung anzugeben, die verbessert ausgestaltet sind.

Diese Aufgabe wird durch ein Raumerweiterung mit den Merkmalen des unabhängigen Patentanspruchs 1 und durch eine Freizeitfahrzeug mit den Merkmalen des unabhängigen Patentanspruchs 11 gelöst. Vorteilhafte Weiterbildungen der Erfindung sind in den Unteransprüchen angegeben.

Die Aufgabe wird durch eine Raumerweiterung für ein Freizeitfahrzeug, insbesondere für ein Wohnmobil oder einen Wohnwagen, mit einem ausfahrbaren Element und zumindest einer Seitenwand, wobei die Seitenwand zumindest mittelbar mit dem ausfahrbaren Element verbunden ist, gelöst, wobei die Seitenwand als flexible Seitenwand ausgebildet ist, wobei die Seitenwand in einem Ausgangszustand, in dem das ausfahrbare Element eingefahren ist, gefaltet ist, wobei die Seitenwand in einem ausgefahren Zustand, in dem das ausfahrbare Element ausgefahren ist, zumindest im Wesentlichen gestreckt ist, wobei zumindest ein Zugmittel vorgesehen ist und wobei das Zugmittel bei einem Verstellen des ausfahrbaren Elements aus dem ausgefahren Zustand in den Ausgangszustand die Seitenwand führt.

Ferner wird die Aufgabe durch ein Freizeitfahrzeug mit solch einer Raumerweiterung gelöst.

Vorteilhaft ist es, dass eine Aufnahme für die Seitenwand vorgesehen ist und dass das Zugmittel bei einem Verstellen des ausfahrbaren Elements aus dem ausgefahren Zustand in den Ausgangszustand die Seitenwand in die Aufnahme führt. Hierdurch kann eine Führung erreicht werden, um beispielsweise ein Einklemmen und/oder Beschädigen der Seitenwand zu verhindern.

Vorteilhaft ist es, dass die Aufnahme als Tasche ausgebildet ist. Hierdurch ist ein vorteilhaftes Verstauen der Seitenwand möglich

Vorteilhaft ist es, dass zumindest ein Zugmittel im ausgefahrenen Zustand an einer Außenseite der zumindest im Wesentlichen gestreckten Seitenwand angeordnet ist. Hierdurch kann das Zugmittel die Seitenwand an ihrer Außenseite stützen. Gegebenenfalls können hierbei auch lokale Verbindungsstellen, insbesondere Schlaufen, an der Seitenwand vorgesehen sein, durch die das Zugmittel läuft.

Vorteilhaft ist es, dass zumindest ein Zugmittel im ausgefahrenen Zustand an einer Innenseite der zumindest im Wesentlichen gestreckten Seitenwand angeordnet ist. Hierdurch kann von innen eine Abstützung erfolgen. Gegebenenfalls können hierbei auch lokale Verbindungsstellen, insbesondere Schlaufen, an der Seitenwand vorgesehen sein, durch die das Zugmittel läuft.

Vorteilhaft ist es, dass zumindest ein Zugmittel im ausgefahrenen Zustand serpentinenförmig zwischen dem ausfahrbaren Element und einem Rahmen entlang der zumindest im Wesentlichen gestreckten Seitenwand hin und her verläuft. Insbesondere kann die Seitenwand umfänglich geschlossen ausgebildet sein. Beispielsweise kann die Seitenwand im gestreckten Zustand rohrförmig beziehungsweise schlauchförmig ausgestaltet sein. Das Zugmittel kann dann über den gesamten Umfang serpentinenförmig umlaufen.

Vorteilhaft ist es, dass eine Wickeltrommel vorgesehen ist, auf die das Zugmittel bei einem Verstellen des ausfahrbaren Elements aus dem ausgefahren Zustand in den Ausgangszustand aufwickelbar ist. Hierbei kann das Zugmittel auf eine einzige Wickeltrommel aufgewickelt werden.

Vorteilhaft ist es, dass das ausfahrbare Element durch das Zugmittel aus dem ausgefahrenen Zustand in den Ausgangszustand verstellbar ist. Somit kann insbesondere beim Aufwickeln des Zugmittels das ausfahrbare Element eingezogen werden.

Vorteilhaft ist es, dass die Seitenwand als aufblasbare Seitenwand ausgebildet ist und dass durch ein Aufblasen der Seitenwand eine Verstellung des ausfahrbaren Elements aus dem Ausgangszustand in den ausgefahrenen Zustand erfolgt. Somit kann eine vorteilhafte Betätigung erfolgen.

Vorteilhaft ist es, dass das Zugmittel zumindest eine Schnur aufweist. Das Zugmittel kann dadurch in vorteilhafter Weise auf- und abgewickelt werden.

Die Schnürung kann ohne stoffliche Verbindung mit den faltbaren Wänden erfolgen und nur durch die Begrenzung der äußeren und/oder inneren Ausweichfläche wirken. Die Schnürung kann aber beispielsweise auch über Führungslaschen mit dem Stoff der Seitenwand verbunden sein.

Über separate Verbindungen innerhalb von zwei Stoffbahnen können Innen- und Außenwand einer aufblasbaren Seitenwand allein über eine äußere Schnürung in die Falttasche geführt werden. Die Schnürung kann grundsätzlich auch innerhalb der Stoffbahnen der Seitenwand erfolgen

Statt einer Schnürung können auch hochgradig kontraktionsfähige Elemente die Führung im Inneren oder Außen bilden, beispielsweise ein in die Seitenwand integriertes Netz und/oder Gummis und/oder Federn.

Weitere Vorteile und Einzelheiten der Erfindung werden anhand des in den schematischen Figuren dargestellten Ausführungsbeispiels näher erläutert. Hierbei zeigt:
- Fig. 1: ein Freizeitfahrzeug mit einer Raumerweiterung entsprechend einem möglichen Ausführungsbeispiel in einer schematischen, auszugsweisen Darstellung;
- Fig. 2: ein Freizeitfahrzeug mit einer Raumerweiterung entsprechend einem möglichen Ausführungsbeispiel in einer schematischen, auszugsweisen Darstellung und
- Fig. 3: den in Fig. 1 mit III bezeichneten Ausschnitt entsprechend einem möglichen Ausführungsbeispiel in einer schematischen Darstellung.

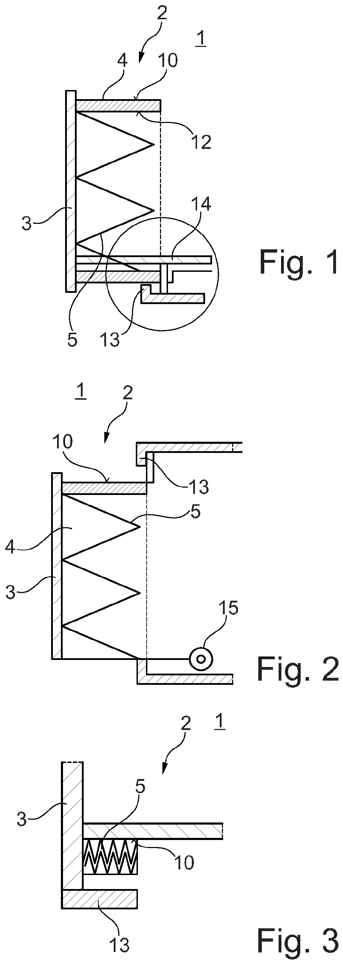

Fig. 1 zeigt ein Freizeitfahrzeug 1, das als Wohnmobil oder Wohnwagen ausgestaltet sein kann, entsprechend einem möglichen Ausführungsbeispiel in einer schematischen, auszugsweisen Darstellung. Das Freizeitfahrzeug 1 kann beispielsweise auf einem Campingplatz abgestellt werden. Dann kann in vorteilhafter Weise ein Umbau vorgenommen werden, der den Nutzwert des Freizeitfahrzeugs 1 wesentlich erhöht. Hierfür weist das Freizeitfahrzeug 1 eine Raumerweiterung 2 auf.

Die Raumerweiterung 2 für das Freizeitfahrzeug 1 umfasst ein ausfahrbares Element 3 und eine Seitenwand 4. Die Seitenwand 4 ist hierbei auf geeignete Weise mit dem ausfahrbaren Element 3 verbunden. Das ausfahrbare Element 3 kann als plattenförmiges Element 3 ausgebildet sein. In diesem Ausführungsbeispiel ist die Seitenwand 4 schlauchförmig ausgebildet, so dass diese umfänglich geschlossen ist. Bei einer abgewandelten Ausgestaltung können aber auch mehrere Seitenwände 4 vorgesehen sein.

Die Seitenwand 4 ist als flexible Seitenwand 4 ausgebildet. Hierbei ist die Seitenwand 4 in einem Ausgangszustand, in dem das ausfahrbare Element 3 eingefahren ist, zunächst zusammengefaltet, wie es in entsprechender Weise in Fig. 3 dargestellt ist. In einem ausgefahren Zustand, in dem das ausfahrbare Element 3 ausgefahren ist, wie es in Fig. 1 dargestellt ist, ist die Seitenwand 4 zumindest im Wesentlichen gestreckt.

Die Raumerweiterung 2 umfasst ein Zugmittel 5. Das Zugmittel 5 weist zumindest eine Schnur 5 auf. In diesem Ausführungsbeispiel ist das Zugmittel 5 durch eine Schnur 5 gebildet. Bei einer abgewandelten Ausgestaltung kann das Zugmittel 5 beispielsweise auch als wickelbares Bandmaterial ausgebildet sein.

Das Zugmittel 5 führt die Seitenwand 4. Insbesondere bei einem Verstellen des ausfahrbaren Elements 3 aus dem ausgefahren Zustand (Fig. 1) in den Ausgangszustand (vergleiche Fig. 3) führt das Zugmittel 5 die Seitenwand 4.

Wie es auch an Hand der Fig. 3 erläutert ist, kann beispielsweise eine Aufnahme 10 für die Seitenwand 4 vorgesehen sein, wobei das Zugmittel 5 bei einem Verstellen des ausfahrbaren Elements 3 aus dem ausgefahren Zustand in den Ausgangszustand die Seitenwand 4 dann zurück in die Aufnahme 10 führt.

Das Zugmittel 5 kann hierfür im ausgefahrenen Zustand an einer Innenseite 12 der zumindest im Wesentlichen gestreckten Seitenwand 4 angeordnet sein. Das Zugmittel 5 verläuft im ausgefahrenen Zustand serpentinenförmig zwischen dem ausfahrbaren Element 3 und einem Rahmen 13 entlang der zumindest im Wesentlichen gestreckten Seitenwand 4 hin und her. Hierdurch ist umfänglich eine Stützung und somit Führung gegeben.

Das Zugmittel 5 kann zudem zum Betätigen dienen. Hierfür kann das ausfahrbare Element 3 durch das Zugmittel 5 aus dem ausgefahrenen Zustand in den Ausgangszustand verstellt werden, indem das Zugmittel 5 betätigt wird, wie es auch an Hand der Fig. 2 beschrieben ist.

Die Raumerweiterung 2 kann einen Teleskopboden 14 aufweisen, der beim Ausfahren mit ausgefahren wird, um eine Nutzung zu ermöglichen. Beispielsweise kann dann der Teleskopboden 14 belastet werden, um eine Erweiterung zum Schlafen zu realisieren.

Fig. 2 zeigt das Freizeitfahrzeug 1 mit der Raumerweiterung 2 entsprechend einem möglichen Ausführungsbeispiel in einer schematischen, auszugsweisen Darstellung. In diesem Ausführungsbeispiel ist das Zugmittel 5 im ausgefahrenen Zustand der Raumerweiterung 2 an einer Außenseite 11 der zumindest im Wesentlichen gestreckten Seitenwand 4 angeordnet. Hierdurch ist ebenfalls eine umfängliche Stützung gegeben.

Die Raumerweiterung 2 weist eine Wickeltrommel 15 auf. Das Zugmittel 5 ist im Ausgangszustand zum großen Teil auf die Wickeltrommel 15 aufgewickelt. Beim Ausfahren der Raumerweiterung 2 wird das Zugmittel 5 dann nach und nach abgewickelt. Beim Verstellen des ausfahrbaren Elements 3 aus dem ausgefahren Zustand in den Ausgangszustand wird das Zugmittel 5 wieder auf die Wickeltrommel 15 aufgewickelt.

Durch die realisierte Schnurführung, bei der das Zugmittel 5 aufgewickelt wird und dadurch auch beim Einfahren gespannt bleibt, wird ein Ausbeulen und somit ein unbeabsichtigtes Falten oder Verklemmung der Seitenwand 4 verhindert.

Fig. 3 zeigt den in Fig. 1 mit III bezeichneten Ausschnitt entsprechend einem möglichen Ausführungsbeispiel in einer schematischen Darstellung. In diesem Ausführungsbeispiel ist die Aufnahme 10 als Tasche 10 ausgebildet.

Die Seitenwand 4 kann als aufblasbare Seitenwand 4 ausgebildet sein. Hierfür kann die Seitenwand 4 doppelwandig ausgeführt sein. Dann ist durch ein Aufblasen der Seitenwand 4 eine Verstellung des ausfahrbaren Elements 3 aus dem Ausgangszustand in den ausgefahrenen Zustand möglich. Die Seitenwand 4 wird hierfür luftdicht angebunden.

Die Seitenwand 4 kann hierbei auch aus einem Dropstichmaterial gebildet sein, bei dem zumindest eine mit Fäden durchzogene Luftkammer vorgesehen ist, so dass ein Aufblasen mit höheren Drücken möglich ist. Dadurch wird eine Versteifung im ausgefahrenen Zustand erzielt.

Die flexible Seitenwand 4 kann insbesondere als Stoffwand 4 ausgebildet sein.

Somit ist eine vorteilhafte Führung der flexiblen und faltbaren Seitenwand 4 der Raumerweiterung möglich. Insbesondere kann eine gesicherte Führung der Seitenwand 4, insbesondere einer Stoffwand 4, erzielt werden, um ein Einklemmen und/oder Beschädigen der Stoffbahn zu verhindern.

Die realisierte Schnurführung dient vorzugsweise dazu, die Seitenwand 4, die vorzugsweise aus Stoffmaterial gebildet ist, im Schließvorgang der Raumerweiterung 2 eindeutig in die dafür vorgesehene Tasche 10 zu führen. Hierfür können eine oder mehrere Schnüre 5 in der Art umlaufend um den Stoff der Seitenwand 4 gebunden sein, dass mit Einziehen der Schnüre 5 die Raumerweiterung 2, die als Push-out ausgebildet sein kann, eingezogen werden kann. Bei einer abgewandelten Ausgestaltung kann die Schnur 5 auch synchron zum Einfahrvorgang eingezogen werden. Dies gilt entsprechend für andere Zugmittel 5.

Somit kann der Stoff der Seitenwand 4 ohne Beschädigung gleichmäßig gefaltet werden. Die Raumerweiterung 2 erhält dadurch eine deutlich verbesserte Lebensdauer. Der Einzug der Raumerweiterung 2 kann allein durch die Schnürung erfolgen.

Die Erfindung ist nicht auf die beschriebenen Ausführungsbeispiele beschränkt.

## Patentansprüche

1. Raumerweiterung (2) für ein Freizeitfahrzeug (1), insbesondere für ein Wohnmobil oder einen Wohnwagen, mit einem ausfahrbaren Element (3) und zumindest einer Seitenwand (4), wobei die Seitenwand (4) zumindest mittelbar mit dem ausfahrbaren Element (3) verbunden ist,
**dadurch gekennzeichnet,**
**dass** die Seitenwand (4) als flexible Seitenwand (4) ausgebildet ist, dass die Seitenwand (4) in einem Ausgangszustand, in dem das ausfahrbare Element (3) eingefahren ist, gefaltet ist, dass die Seitenwand (4) in einem ausgefahren Zustand, in dem das ausfahrbare Element (3) ausgefahren ist, zumindest im Wesentlichen gestreckt ist, dass zumindest ein Zugmittel (5) vorgesehen ist und dass das Zugmittel (5) bei einem Verstellen des ausfahrbaren Elements (3) aus dem ausgefahren Zustand in den Ausgangszustand die Seitenwand (4) führt.

2. Raumerweiterung nach Anspruch 1,
**dadurch gekennzeichnet,**
**dass** eine Aufnahme (10) für die Seitenwand (4) vorgesehen ist und dass das Zugmittel (5) bei einem Verstellen des ausfahrbaren Elements (3) aus dem ausgefahren Zustand in den Ausgangszustand die Seitenwand (4) in die Aufnahme (10) führt.

3. Raumerweiterung nach Anspruch 2,
**dadurch gekennzeichnet,**
**dass** die Aufnahme (10) als Tasche (10) ausgebildet ist.

4. Raumerweiterung nach einem der Ansprüche 1 bis 3,
**dadurch gekennzeichnet,**
**dass** zumindest ein Zugmittel (5) im ausgefahrenen Zustand an einer Außenseite (11) der zumindest im Wesentlichen gestreckten Seitenwand (4) angeordnet ist.

5. Raumerweiterung nach einem der Ansprüche 1 bis 4,
**dadurch gekennzeichnet,**
**dass** zumindest ein Zugmittel (5) im ausgefahrenen Zustand an einer Innenseite (12) der zumindest im Wesentlichen gestreckten Seitenwand (4) angeordnet ist.

6. Raumerweiterung nach einem der Ansprüche 1 bis 5 ,
**dadurch gekennzeichnet,**
**dass** zumindest ein Zugmittel (5) im ausgefahrenen Zustand serpentinenförmig zwischen dem ausfahrbaren Element (3) und einem Rahmen (13) entlang der zumindest im Wesentlichen gestreckten Seitenwand (4) hin und her verläuft.

7. Raumerweiterung nach einem der Ansprüche 1 bis 6,
**dadurch gekennzeichnet,**
**dass** eine Wickeltrommel (15) vorgesehen ist, auf die das Zugmittel (5) bei einem Verstellen des ausfahrbaren Elements (3) aus dem ausgefahren Zustand in den Ausgangszustand aufwickelbar ist.

8. Raumerweiterung nach einem der Ansprüche 1 bis 7,
**dadurch gekennzeichnet,**
**dass** das ausfahrbare Element (3) durch das Zugmittel (5) aus dem ausgefahrenen Zustand in den Ausgangszustand verstellbar ist.

9. Raumerweiterung nach einem der Ansprüche 1 bis 8,
**dadurch gekennzeichnet,**
**dass** die Seitenwand (4) als aufblasbare Seitenwand (4) ausgebildet ist und dass durch ein Aufblasen der Seitenwand (4) eine Verstellung des ausfahrbaren Elements (3) aus dem Ausgangszustand in den ausgefahrenen Zustand erfolgt.

10. Raumerweiterung nach einem der Ansprüche 1 bis 9,
**dadurch gekennzeichnet,**
**dass** das Zugmittel (5) zumindest eine Schnur (5) aufweist.

11. Freizeitfahrzeug (1), insbesondere Wohnmobil oder Wohnwagen, mit zumindest einer Raumerweiterung (2) nach einem der Ansprüche 1 bis 10.
